# EUROPEAN PATENT APPLICATION

(11) **EP 2 518 090 A1**
(43) Date of publication of application: **31.10.2012**
(21) Application number: 12164858.8
(22) Date of filing: 20.04.2012
(51) Int. Cl.: C08F 10/00

(54) **Catalyst components for the polymerization of olefins and catalysts therefrom obtained**

(30) Priority: 28.04.2011 EP 11164025
(71) Applicant: Basell Poliolefine Italia S.r.l., 20127 Milano (IT)
(72) Inventor: LIGUORI, Dario, 44122 Ferrara (IT); VITALE, Gianni, 44121 Ferrara (IT); PATER, Joachim T. M., 44020 Ferrara (IT); MORINI, Giampiero, 44122 Ferrara (IT); DALL'OCCO, Tiziano, 44121 Ferrara (IT)
(74) Representative: Giberti, Stefano

(57) **Abstract**

Catalyst components for the polymerization of olefins CH₂=CHR wherein R is hydrogen or a hydrocarbon radical having 1-12 carbon atoms, comprising Mg, Ti, Cl and a lactone.

## Description

The present invention relates to catalyst components for the polymerization of olefins CH₂=CHR, wherein R is hydrogen or hydrocarbon radical having 1-12 carbon atoms. In particular, the invention relates to catalyst components suitable for the preparation of homopolymers and copolymers of ethylene and to the catalysts obtained therefrom. Furthermore, the invention also relates to the achievement of ethylene homo or copolymers having high fluidity in the molten state and good morphological properties.

In particular, the present invention relates to a solid catalyst component, comprising titanium magnesium, halogen and a specific electron donor structure or derivatives thereof, having a specific combination of physical and chemical characteristics.

The MWD is a particularly important characteristic for ethylene (co) polymers, in that it affects both the rheological behavior and therefore the processability of the melt, and the final mechanical properties. Polyolefins having a broad MWD, particularly coupled with relatively high average molecular weights, are preferred in blow molding and high speed extrusion processing for example for the production of pipes or films. In fact, products characterized by broad MWD have superior mechanical properties that enable their use in applications in which high stress resistance is required. The processing conditions for these polymers are peculiar and in fact under those conditions a narrow MWD product could not be processed because it would present failures due to melt fracture.

As it is difficult to have available catalysts offering the right pattern of molecular weight distribution and average molecular weight, one of the most common methods for preparing broad MWD polymers is the multi-step process based on the production of different molecular weight polymer fractions in each step, sequentially forming macromolecules with different length.

The control of the molecular weight obtained in each step can be carried out according to different methods, for example by varying the polymerization conditions or the catalyst system in each step, or by using a molecular weight regulator. Regulation with hydrogen is the preferred method either working in suspension or in gas phase. This latter kind of process is nowadays highly preferred due to both the high qualities of the products obtained and to the low operative costs involved with it.

For a catalyst to perform in such a process, a critical step is that in which the low molecular weight fraction is prepared. In fact, one of important features that the catalyst should possess is the so called "hydrogen response", that is the extent of capability to reduce the molecular weight of polymer produced in respect of increasing hydrogen concentrations. Higher hydrogen response means that a lower amount of hydrogen is required to produce a polymer with a certain molecular weight. Performing well in the low molecular weight production stage also means having higher polymerization activity which allows to compensate for the depressive effect on the catalyst activity caused by relatively high hydrogen concentration.

In addition, due to the polymerization conditions and characteristics of the polymer produced in this step (intrinsically higher fragility), the catalyst/polymer system is often fragmented in very small particles that lowers the polymer bulk density and creates high amount of fines that makes the operation of the plant difficult, particularly in the gas-phase polymerization. One of the ways to obviate to this problem would be performing the step of preparing the low molecular weight fraction after a first step in which the high molecular weight fraction is prepared. While this option may help in smoothing the plant operability, it surely causes worsening of the final property of the product which turns out to be less homogeneous. So, it would be another important feature of the catalyst that of having a suitable morphology resistance under low molecular weight gas-phase polymerization conditions.

One preferred way of producing morphology improvement in a catalyst is to modify its physical features in terms of porosity and surface area. For example WO00/78820 discloses catalysts able to give ethylene polymers with broad MWD characterized by a total porosity (mercury method) preferably in the range 0.38-0.9 cm³/g, and a surface area (BET method) preferably in the range 30-70 m²/g. The pore distribution is also specific; in particular, in all the catalysts described in the examples at least 45% of the porosity is due to pores with radius up to 0.1µm. The catalyst components are obtained by (a) a first reaction between a Ti compound and a MgCl₂·EtOH adduct which has been subject to physical dealcoholation, (b) an intermediate treatment with an aluminum alkyl compound and (c) by a second reaction with a titanium compound. Also in this case the catalysts contain a substantial amount of titanium having a reduced oxidation state and in addition show a rather low amount of residual Al in the final catalyst. Notwithstanding the good performances under conventional polymerization conditions, it shows an unsatisfactory behavior under the demanding test conditions used by the applicant. This is also confirmed in the said document by the fact that when broad MWD polyethylene is prepared with two sequential polymerization stages, the low molecular weight fraction is always prepared in the second polymerization stage.

Use of electron donor compounds in the preparation of catalyst for ethylene polymerization usually causes the catalyst to become able to produce ethylene polymers with a narrow molecular weight distribution; however, it does not usually improve its morphological stability. In WO2005/123784 are disclosed catalysts components useful for olefin polymerization in particular propylene, comprising the use of γ-butyrolactones as internal donors. The catalyst offered moderate activity and stereospecificity in polypropylene production without showing any polymerization of ethylene.

It is therefore still felt the need of a catalyst having high morphological stability under the low molecular weight ethylene polymerization conditions while at the same time maintaining characteristics of high activity.

The applicant has found that such needs are satisfied by the use of a catalyst component comprising Mg, Ti, Cl and a lactone of formula (I): 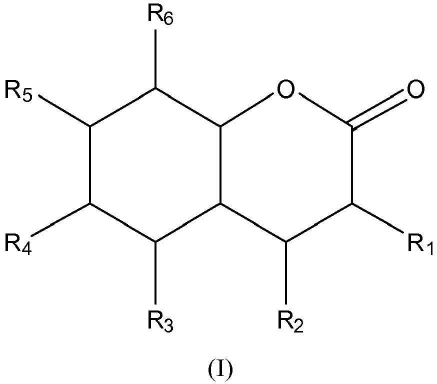 in which the rings maybe saturated or unsaturated and the groups R₁ to R₆, independently, are selected from hydrogen, halogen, C1-C15 hydrocarbon groups, hydroxyl groups, RO- groups, RCO- groups, ROCO and RCOO groups in which R is a C1 C15 hydrocarbon group.

Preferably, the lactones are selected from those of the formula above in which the groups R₁ to R₆, independently are hydrogen or C1-C10 alkyl groups. Among them, hydrogen or linear or branched C1-C5 alkyl group are preferred.

Also preferred are the lactones belonging to the following formula:

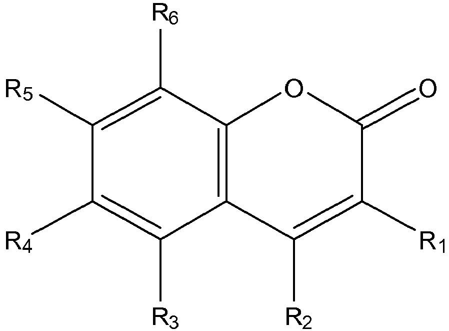

In which the groups R₁-R₆ have the same meaning discussed above.

Examples of preferred lactones are 2H-chromen-2-one (coumarin), octahydro-2H-chromen-2-one (octahydrocoumarin), ethyl 2-oxo-2H-chromen-3-carboxylate(ethyl 3-coumarincarboxylate), 4-hydroxy-2H-chromen-2-one (4-hydroxycoumarin), 7-hydroxy-2H-chromen-2-one (7-hydroxycoumarin) and 6-methyl-2H-chromen-2-one (6-methylcoumarin). Preferably, the amount of lactone is in molar ratio with respect to the titanium atoms ranging from 0.05 to 1 preferably from 0.1 to 0.8 and more preferably from 0.1 to 0.5.

Preferably, the catalyst components according to the present invention contain an amount of OR¹ groups in which R¹ is a C1-C20 hydrocarbon group, optionally containing heteroatoms, up to an amount such as to give a molar OR^{I}/Ti ratio lower than 0.5.

Preferably, the catalyst is also characterized by the fact that substantially all the titanium atoms are in valence state of 4. Throughout the present application the wording "substantially all the titanium atoms are in valence state of 4" means that at least 95% of the Ti atoms have a valence state of 4.

Depending on the preparation process, the final catalyst component may also contain aluminum atoms. In such a case, the Mg/Al molar ratio can range from 1 to 35, preferably from 3 to 30, more preferably from 4 to 20 and most preferably in the range 4 to 16. When present, the amount of Al is typically higher than 0.5%wt., preferably higher than 1% and more preferably in the range of from 1.2-3.5%. Preferably, the amount of Al is lower than that of Ti.

In addition to the above characteristics, the catalyst components of the invention preferably show porosity due to pores with radius equal to or less than 1 µm determined with the mercury method higher than 0.30 cm³/g and more preferably higher than 0.40 cm³/g usually in the range 0.50-0.80 cm³/g. The total porosity P_{T} can be in the range of 0.50-1.50 cm³/g, particularly in the range 0.60 and 1.20 cm³/g.

The surface area measured by the BET method is preferably lower than 80 and in particular comprised between 10 and 70 m²/g. The porosity measured by the BET method generally ranges from 0.10 and 0.50, preferably from 0.10 to 0.40 cm³/g.

Preferably, in the catalyst component of the invention the average pore radius value, for porosity due to pores up to 1µm, is in the range from 650 to 1200 Å.

The particles of solid component have substantially spherical morphology and average diameter comprised between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

In a particular aspect of the present invention the catalyst component comprises, in addition to the lactone compound, a Ti compound having at least one Ti-halogen bond and a magnesium chloride. Optionally it may also contain an aluminum chloride, or more generally, an aluminum halide. As mentioned before, the catalyst component may also contain groups different from halogen, in any case in amounts lower than 0.5 mole for each mole of titanium and preferably lower than 0.3. Throughout the present application the term magnesium chloride means a magnesium compound having at least a Mg-Cl bond, the term aluminum chloride means an aluminum compound containing at least an Al-Cl bond and the term aluminum halide means an aluminum compound containing at least an Al-X bond, where X is Cl, Br or I.

The magnesium chloride is preferably magnesium dichloride and is more preferably in the active form meaning that it is characterized by X-ray spectra in which the most intense diffraction line which appears in the spectrum of the non active chloride (lattice distanced of 2,56Å) is diminished in intensity and is broadened to such an extent that it becomes totally or partially merged with the reflection line falling at lattice distance (d) of 2.95Å. When the merging is complete the single broad peak generated has the maximum of intensity which is shifted towards angles lower than those of the most intense line.

The preferred titanium compounds have the formula Ti(OR¹)ₙX_{y-n}, wherein n is a number comprised between 0 and 0.5 inclusive, y is the valence of titanium, R¹ has the meaning given above and preferably is an alkyl, cycloalkyl or aryl radical having 1-8 carbon atoms and X is halogen. In particular R¹ can be methyl, ethyl, iso-propyl, n-butyl, isobutyl, 2-ethylhexyl, n-octyl and phenyl; X is preferably chlorine.

The aluminum halide can be chosen among those of formula AlXM₂ where X is halogen as previously defined and M can be, independently, OR¹ groups as defined above or halogen.

Preferably the aluminum halide is an aluminum chloride of formula AlClM₂ where M has the same meaning specified above. Preferably, M is chlorine.

The catalyst component of the invention can be prepared by various techniques. For example they can be prepared by comilling magnesium dichloride in an anhydrous state and the lactone compound under conditions in which activation of the magnesium dichloride occurs. The so obtained product can be treated one or more times with a suitable amount of TiCl₄. This treatment is followed by washings with hydrocarbon solvents until chloride ions disappeared. According to another a particular embodiment, the solid catalyst component can be prepared by reacting a suitable amount titanium compound of formula Ti(OR¹)_{n-y}X_{y}, where n is the valence of titanium and y is a number between 1 and n, and R¹ has the meaning given above, preferably TiCl₄, with a magnesium chloride or a precursor thereof, in the presence of suitable amount of the lactone.

A particularly preferred method suitable for the preparation of spherical components mentioned above comprises a first step (a) in which a compound MgCl₂.m(R²OH)tH₂O, wherein 0.3 ≤ m ≤ 1.7, t is from 0 to 0.6 preferably from 0.02 to 0.5 and R² is an alkyl, cycloalkyl or aryl radical having 1-12 carbon atoms is reacted with the said titanium compound of the formula Ti(OR¹)ₙX_{y-n}, in which n, y, X and R¹ have the same meaning defined above.

In this case MgCl₂.mR²OH represents a precursor of Mg dihalide. This kind of compounds can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained, it is convenient to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7 moles per mole of MgCl₂. A process of this type is described in EP-A-395083.

Generally these dealcoholated adducts are also characterized by a porosity (measured by mercury method) due to pores with radius due to pores with radius up to 0.1 µm ranging from 0.15 to 2.5 cm³/g preferably from 0.25 to 1.5 cm³/g.

In the reaction of step (a) the molar ratio Ti/Mg is stoichiometric or higher; preferably this ratio is higher than 3. Still more preferably a large excess of titanium compound is used. Preferred titanium compounds are titanium tetrahalides, in particular TiCl₄. The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The solid can be separated by the excess of titanium compound at high temperatures by filtration or sedimentation and siphoning.

In a second step (b) the lactone is contacted with the precursor obtained from the step (a) The contact is preferably carried out in an inert hydrocarbon as diluent at a temperature ranging from room temperature to the boiling temperature of the lactone, generally from 40 to 150°C and preferably from 50°C to 140°C. The lactone can be used in molar ratio with the Ti compound in the solid catalyst component coming from step (a) ranging from 0.01 to 5, preferably from 0.1 to 4 and more preferably from 0.1 to 2. According to this method, the lactone becomes fixed on the catalyst component in variable amounts which may not be correlated with the effect on the morphological stability i.e., with the capability of the catalyst of producing high bulk density polymers even under demanding test conditions. In fact, the positive effect on the morphological stability is always present even when the amount of fixed donor is very low. If desired, an additional electron donor can be added in order to impart specific properties to the final catalyst component.

According to variance of the method, the step (a) may be carried out in the presence of an aluminum compound of formula AlM₃ where M can be, independently, OR¹ groups as defined above or halogen. Preferably, at least one M is chlorine, more preferably two M are chlorine and most preferably all M are chlorine.

The aluminum compound, preferably AlCl₃, which is used in amounts such as to have Mg/Al molar ratio can range from 1 to 35, preferably from 3 to 30, more preferably from 4 to 20 and most preferably in the range 4-16. The so obtained product can then be subjected to step (b) as described above.

The catalyst components of the invention whatever is the method for their preparation, form catalysts, for the polymerization of alpha-olefins CH₂=CHR wherein R is hydrogen or a hydrocarbon radical having 1-12 carbon atoms by reaction with Al-alkyl compounds. In particular Al-trialkyl compounds, for example Al-trimethyl, Al-triethyl, Al-tri-n-butyl, Al-triisobutyl are preferred. The Al/Ti ratio is higher than 1 and is generally comprised between 5 and 800.

The catalyst components of the invention and catalysts obtained therefrom find applications in the processes for the preparation of several types of olefin polymers.

As mentioned above, the catalyst components of the invention are endowed with a particularly high morphological stability under high hydrogen concentration for the preparation of low molecular ethylene (co)polymer. Thus, they are particularly suitable to be used in cascade, or sequential polymerization processes, for the preparation of broad molecular weight distribution ethylene polymers both in slurry and gas-phase. In general the catalyst can be used to prepare: high density ethylene polymers (HDPE, having a density higher than 0.940 g/cm³), comprising ethylene homopolymers and copolymers of ethylene with alpha-olefins having 3-12 carbon atoms; linear low density polyethylene's (LLDPE, having a density lower than 0.940 g/cm³) and very low density and ultra low density (VLDPE and ULDPE, having a density lower than 0.920 g/cm³, to 0.880 g/cm³ cc) consisting of copolymers of ethylene with one or more alpha-olefins having from 3 to 12 carbon atoms, having a mole content of units derived from the ethylene higher than 80%; elastomeric copolymers of ethylene and propylene and elastomeric terpolymers of ethylene and propylene with smaller proportions of a diene having a content by weight of units derived from the ethylene comprised between about 30 and 70%, isotactic polypropylenes and crystalline copolymers of propylene and ethylene and/or other alpha-olefins having a content of units derived from propylene higher than 85% by weight; shock resistant polymers of propylene obtained by sequential polymerization of propylene and mixtures of propylene with ethylene, containing up to 30% by weight of ethylene; copolymers of propylene and 1-butene having a number of units derived from 1-butene comprised between 10 and 40% by weight.

However, as previously indicated they are particularly suited for the preparation of broad MWD polymers and in particular of broad MWD ethylene homopolymers and copolymers containing up to 20% by moles of higher α-olefins such as propylene, 1-butene, 1-hexene, 1-octene prepared by cascade polymerization technology.

One additional advantage of the catalyst described in the present application is that it can be used as such in the polymerization process by introducing it directly into the reactor without the need of pre-polymerizing it. This allows simplification of the plant set-up and simpler catalyst preparation process.

The main polymerization process in the presence of catalysts obtained from the catalytic components of the invention can be carried out according to known techniques either in liquid or gas phase using for example the known technique of the fluidized bed or under conditions wherein the polymer is mechanically stirred. In case of liquid phase polymerization both continuous stirred tank reactors and liquid full loop reactors can be used. However, the preferred process is carried out in the gas phase fluidized bed reactor. Examples of gas-phase processes wherein it is possible to use the spherical components of the invention are described in WO92/21706, USP 5,733,987 and WO93/03078. In these processes a pre-contacting step of the catalyst components, a pre-polymerization step and a gas phase polymerization step in one or more reactors in a series of fluidized or mechanically stirred bed are comprised even if as mentioned above, they are not strictly required with the catalyst of the invention.

Therefore, in the case that the polymerization takes place in gas-phase, the process of the invention is preferably carried out according to the following steps:
(a) contacting the catalyst components in the absence of polymerizable olefin or optionally in the presence of said olefin in amounts not greater than 20 g per gram of the solid component (A);
(b) gas-phase polymerization of ethylene or mixtures thereof with α-olefins CH₂=CHR, in which R is a hydrocarbon radical having 1-10 carbon atoms, in one or more fluidized or mechanically stirred bed reactors using the catalyst system coming from (a).

As mentioned above, in order to further broaden the MWD of the product, the process of the invention can be performed in two or more reactors working under different conditions and optionally by recycling, at least partially, the polymer which is formed in the second reactor to the first reactor. Usually, the two or more reactors work with different concentrations of molecular weight regulator or at different polymerization temperatures or both. Preferably, the polymerization is carried out in two or more steps operating with different concentrations of molecular weight regulator.

As already explained, one of the most interesting feature of the above described catalysts is the capability to produce ethylene polymers with low molecular weight, expressed by high melt index "E" value and good morphological properties expressed by high values of bulk density. In particular, the said ethylene polymers have Melt Index E higher than 40 and bulk densities higher than 0.35. Particularly preferred are those having MI"E" higher than 50 and bulk density higher than 0.37 and most preferred are those with MI"E" in the range 60-400 and bulk density in the range 0.35-0.6. When these kind of polymers are produced in the low molecular weight polymerization step of a multi-step process, they allow obtaining ethylene polymers having at the same time broad MWD usually expressed by a melt flow ratio (F/P) value over 20, preferably over 25, which is the ratio between the melt index measured with a 21.6 Kg load (melt index F) and the melt index measured with a 5 Kg load (melt index P), determined at 190°C according to ASTM D-1238, bulk density over 0.44, preferably over 0.46 and preferably good homogeneity expressed by a number of gels (determined by the method described in the characterization section) having diameter of higher than 0.2 mm of lower than 70 and preferably lower than 60. Moreover, preferably the films contain no gels with diameter higher than 0.5 mm. Once used in the production of films or pipes indeed, the polymers showed a very good processability while the extruded articles showed a very low number of gels. The polymer is obtained in form of spherical particles meaning that the ratio between the greater axis and the smaller axis is equal to, or lower than, 1.5 and preferably lower than 1.3.

The following examples are given in order to further describe and not to limit the present invention.

The properties are determined according to the following methods:

| | |
|---|---|
| MIE flow index: | ASTM-D 1238 condition E |
| MIF flow index: | ASTM-D 1238 condition F |
| MIP flow index: | ASTM D 1238 condition P |
| Bulk density: | DIN-53194 |

### Determination of Mg, Ti ₍ₜₒₜ₎ and Al: has been carried out via inductively coupled plasma emission spectroscopy (ICP) on a "I.C.P SPECTROMETER ARL Accuris".

The sample was prepared by analytically weighting, in a "fluxy" platinum crucible", 0.1=03 grams of catalyst and 3 grams of lithium metaborate/tetraborate 1/1 mixture. The crucible is placed on a weak Bunsen flame for the burning step and then after addition of some drops of KI solution inserted in a special apparatus "Claisse Fluxy" for the complete burning. The residue is collected with a 5% v/v HNO₃ solution and then analyzed via ICP at the following wavelength: magnesium, 279.08 nm; titanium, 368.52 nm; aluminum, 394.40 nm.

### Determination of lactone: via Gas-Chromatography analysis.

### NMR determination of the lactones

The determination of the some lactones in the final catalyst have also been carried out using standard NMR technique using an appropriate internal standard for a quantitative analysis. NMR Spectra were recorded at a Bruker AV200 spectrometer and referenced to the residual portion solvent peak for 1H. Chemical shifts are quoted in ppm relative to tetramethylsilane. All manipulations were performed in an inert-atmosphere N₂ glovebox. The samples were prepared by analytically weighing, 0.01 ÷ 0.02 grams of catalyst in a 5 mm NMR tube, adding 0.5 ÷ 0.8 ml of methanol-d4 as solvent and a defined amount of a suitable internal standard *(e.g. C₂H₂Cl₄).*

The amount of lactone present in the catalysts was determined by the molar ratio between the internal standard added and the lactones. The molar ratio was calculated from the *(normalized)* ¹H intensity of an appropriate peak of the corresponding lactones *(e.g. -CH₂-,-CH-, )* and the intensity of the characteristic peak of the internal standard added *(e.g. about 6.1 ppm for C₂H₂Cl₄).*

### Procedure for the preparation of the spherical support (adduct of MgCl₂/EtOH)

A magnesium chloride and alcohol adduct was prepared following the method described in Example 2 of USP 4,399,054, but working at 2000 RPM instead of 10000 RPM. The adduct containing about 3 mols of alcohol and about 2.5%wt of H₂O and had an average size ranging from 40 to 60 µm.

The adduct was subject to a thermal treatment, under nitrogen stream, over a temperature range of 50-150 °C until a weight content of 25% of alcohol was reached.

### Ethylene polymerization at low hydrogen concentration: Procedure A.

A 4.5-liter stainless-steel autoclave equipped with a magnetic stirrer, temperature and pressure indicator, feeding line for hexane, ethylene, and hydrogen, was used and purified by fluxing pure nitrogen at 70°C for 60 minutes. Then, a solution of 1550 cm³ of hexane containing 7.7 cm³ of 10 % by wt/vol TEAL/hexane was introduced at a temperature of 30°C under nitrogen flow. In a separate 200 cm3 round bottom glass bottle were successively introduced, 50 cm3 of anhydrous hexane, 1 cm3 of 10 % by wt/vol, TEAL/hexane solution and 0.040÷0.070 grams of the solid catalyst of Table 1. They were mixed together, aged 10 minutes at room temperature and introduced under nitrogen flow into the reactor. The autoclave was closed, then the temperature was raised to 85°C, hydrogen (3 bars partial pressure) and ethylene (7 bars partial pressure) were added.

Under continuous stirring, the total pressure was maintained at 85°C for 120 minutes by feeding ethylene. At the end the reactor was depressurized and the temperature was dropped to 30°C. The recovered polymer was dried at 70°C under a nitrogen flow and analyzed. The obtained results are reported in Table 2.

### Ethylene polymerization at high hydrogen concentration: Procedure B.

The procedure is carried out under the same conditions disclosed for the procedure (A) with the only difference that triisobutylaluminum is used instead of triethylaluminum, the ethylene pressure is 3 bars and the hydrogen pressure is 9 bars. The obtained results are reported in Table 3.

### Method for evaluation of the polymer morphology:

A visual inspection is done on microscopy pictures of the polymer particles:
- When at least 80% of the polymer particles is broken, the morphology is indicated as 'broken'
- When at least 80% of the polymer particles is of regular morphology, the sample quality is indicated as 'spheres'
- The term "broken+spheres" means that substantial equal proportion of broken and regular particles.

### EXAMPLES

In the below described examples solid catalyst components are prepared that either below to the scope of the invention, or are comparative components. The obtained components were analyzed for their composition; the results are listed in Table 1. Furthermore, the components were used in polymerization tests, using the above described polymerization procedures. The results of the polymerizations are shown in Table 2 below.

The lactone compounds used in the examples are all commercially available from Aldrich.

### Example 1 - Preparation of an intermediate solid component

Into a 2 L reaction vessel, purged with nitrogen, 1 L of TiCl₄ was introduced at 0°C. Then, at the same temperature, 70 grams of a spherical MgCl₂/EtOH adduct containing 25%wt of ethanol, prepared as described above, were added under stirring.

The temperature was raised to 140°C in 2 hours and maintained for 60 min. Then, the stirring was discontinued, the solid product was allowed to settle and the supernatant liquid was siphoned off.

The solid residue was then washed once with heptane at 80°C and five times with hexane at 25°C and dried under vacuum at 30°C and analyzed. Solid composition is reported in Table 1.

### Example 2 - Preparation of 2H-chromen-2-one containing catalyst component

Into a 250 cm³ four-necked round flask, purged with nitrogen, 100 cm³ of heptane and 10 grams of the intermediate solid component previously prepared as Example 1, were introduced at 25°C. At the same temperature, an amount of 2H-chromen-2-one (also known as coumarin) was added, such to charge a molar ratio of the lactone compound to the titanium of 0.4.

Under stirring, the temperature was raised to 100°C and maintained for 3 hours. Then, the temperature was decreased to 80°C, the stirring was discontinued, the solid product was allowed to settle for 30 minutes and the supernatant liquid was siphoned off.

The solid was washed with 100 cm³ of anhydrous heptane at 80°C and three times with hexane at 25°C. Finally, the solid was dried under vacuum and analyzed. Solid composition is reported in Table 1.

### Example 3 - Preparation of 2H-chromen-2-one containing catalyst component

Example 2 was repeated, now charging a molar ratio of 2H-chromen-2-one to Ti of 0.7 instead of 0.4. The obtained solid was analyzed and resulting composition is reported in Table 1.

### Example 4 - Preparation of 2H-chromen-2-one containing catalyst component

Example 2 was repeated, now charging a molar ratio of 2H-chromen-2-one to Ti of 1.0 instead of 0.4. The obtained solid was analyzed and resulting composition is reported in Table 1.

### Examples 5 to 9 - Preparation of the lactone containing catalyst components

Example 2 was repeated, now charging a different type of lactone compound. The charged compounds are represented in Table 1.

The obtained solid components were analyzed and resulting compositions are reported in Table 1.

### Example 10 - Preparation of an intermediate solid component with AlCl₃

The procedure described in Example 1 was repeated, but now an amount of AlCl₃ was charged to the TiCl₄ and the spherical support material before increasing the temperature. The amount of added AlCl₃ was such to have a molar ratio of aluminum to the charged magnesium of 0.125 mo lar.

The titanation was carried out at 135°C for a period of 5 hours. Settling, washing and drying of the obtained catalyst were done as described in Example 1.

### Example 11 - Preparation of 2H-chromen-2-one containing catalyst component

Example 2 was repeated, but now using as intermediate catalyst component the product produced as described in Example 10, instead of the one prepared as described in Example 1.

**Table 1 Compositions of the solid catalyst components**

| **Example** | **Mg** | **Ti** | **Al** | **Lactones** | |
|---|---|---|---|---|---|
| | **wt%** | **wt%** | **wt%** | **Type** | **wt%** |
| 1 (comparative) | 18.7 | 7.6 | - | - | - |
| 2 (inventive) | 17.7 | 7.0 | - | LAC1 | 8.0 |
| 3 (inventive) | 16.6 | 6.7 | - | LAC1 | 13.2 |
| 4 (inventive) | 15.7 | 6.2 | - | LAC1 | 17.2 |
| 5 (inventive) | 17.8 | 6.9 | - | LAC2 | 7.4 |
| 6 (inventive) | 17.1 | 6.7 | - | LAC3 | 15.3 |
| 7 (inventive) | 18.0 | 7.0 | - | LAC4 | 6.0 |
| 8 (inventive) | 17.2 | 6.9 | - | LAC5 | 8.2 |
| 9 (inventive) | 17.4 | 6.9 | - | LAC6 | 9.7 |
| 10 (comparative) | 16.5 | 6.8 | 2.1 | - | - |
| 11 (inventive) | 16.5 | 6.4 | 2.0 | LAC1 | 6.5 |

| | | | | | |
|---|---|---|---|---|---|
| LAC1 2H-chromen-2-one (coumarin) LAC2 octahydro-2H-chromen-2-one (octahydrocoumarin) LAC3 ethyl 2-oxo-2H-chromen-3-carboxylate(ethyl 3-coumarincarboxylate) LAC4 4-hydroxy-2H-chromen-2-one (4-hydroxycoumarin) LAC5 7-hydroxy-2H-chromen-2-one (7-hydroxycoumarin) LAC6 6-methyl-2H-chromen-2-one (6-methylcoumarin) | | | | | |

**Table 2 Results of the polymerization experiments at low hydrogen conditions (Polymerization procedure A)**

| **Catalyst component** | **Yield** | **MI E** | **F/E** | **BDP** | **Morphology** |
|---|---|---|---|---|---|
| | **kgpE/gcat** | **dg/min** | **-** | **g/cm³** | |
| 1 | 20.0 | 0.4 | 36.7 | 0.231 | broken |
| 2 | 19.9 | 0.6 | 32.2 | 0.304 | spheres |
| 3 | 13.0 | 2.3 | 34.0 | 0.336 | spheres |
| 4 | 14.9 | 0.5 | 34.0 | 0.333 | spheres |
| 5 | 16.6 | 0.5 | 37.3 | 0.343 | spheres |
| 6 | 17.7 | 0.5 | 38.3 | 0.309 | spheres |
| 7 | 19.3 | 0.9 | 37.4 | 0.310 | spheres |
| 8 | 20.1 | 0.7 | 35.9 | 0.326 | spheres |
| 9 | 16.5 | 0.8 | 35.5 | 0.329 | spheres |
| 10 | 18.6 | 0.5 | 37.1 | 0.313 | spheres/broken |
| 11 | 16.4 | 0.8 | 38.2 | 0.340 | spheres |

**Table 3 Results of the polymerization experiments at high hydrogen conditions (Polymerization procedure B)**

| **Catalyst component** | **MI E** | **BDP** | **Morphology** |
|---|---|---|---|
| | **dg/min** | **g/cm³** | |
| 1 | 107 | 0.254 | broken |
| 2 | 70 | 0.386 | spheres |
| 3 | 132 | 0.315 | spheres |
| 4 | --- | 0.376 | spheres |
| 5 | 182 | 0.352 | spheres |
| 8 | 122 | 0.343 | spheres |
| 9 | 186 | 0.344 | spheres |
| 10 | 93 | 0.343 | spheres |
| 11 | 90 | 0.395 | spheres |

## Claims

1. Catalyst components for the polymerization of olefins CH₂=CHR wherein R is hydrogen or a hydrocarbon radical having 1-12 carbon atoms, comprising Mg, Ti, Cl and a lactone of formula (I) : 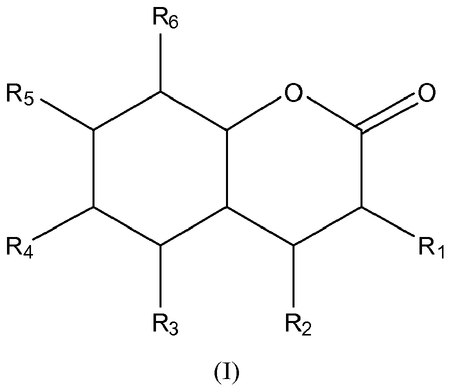 in which the rings maybe saturated or unsaturated and the groups R₁ to R₆, independently, are selected from hydrogen, halogen, C1-C15 hydrocarbon groups, hydroxyl groups, RO- groups, RCO- groups, ROCO and RCOO groups in which R is a C1 C15 hydrocarbon group.

2. The catalyst component according to claim 1 in which the lactone is selected from those in which the groups R₁ to R₆, independently are hydrogen or C1-C10 alkyl groups.

3. The catalyst component according to claim 1 in which the lactone is selected from those of the following formula 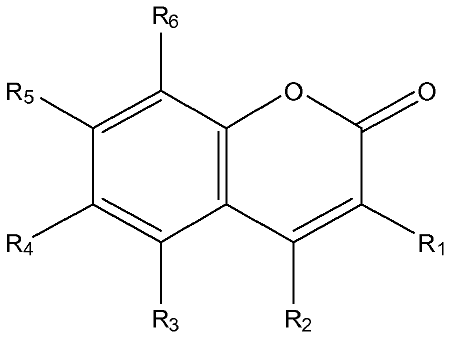 in which the groups R₁-R₆ have the same meaning according to claim 1.

4. The catalyst component according to claim 1 in which the amount of Ti ranges from 3.5 to 8%wt.

5. The catalyst component according to claim 1 further containing aluminum atoms in amount such as the Mg/Al molar ratio ranges from 1 to 35.

6. Catalyst for the polymerization of olefins CH₂=CHR wherein R is hydrogen or a hydrocarbon radical having 1-12 carbon atoms, comprising the product of the reaction between (a) the solid catalyst component according to any of the preceding claims and (b) one or more Al-alkyl compounds.

7. The catalyst according to claim 6 in which the Al-alkyl compounds are Al-trialkyl compounds.

8. Process for the polymerization of olefins CH₂=CHR wherein R is hydrogen or a hydrocarbon radical having 1-12 carbon atoms, carried out in the presence of the catalyst according to any of claims 6-7.
